# EUROPEAN PATENT APPLICATION

(11) **EP 3 293 826 A1**
(43) Date of publication of application: **14.03.2018**
(21) Application number: 17189384.5
(22) Date of filing: 05.09.2017
(51) Int. Cl.: H01Q 13/18, H01Q 9/04, H01Q 1/22, H01Q 1/24

(54) **ANTENNA FEEDER CONFIGURED FOR FEEDING AN ANTENNA INTEGRATED WITHIN AN ELECTRONIC DEVICE**

(30) Priority: 09.09.2016 EP 16306133
(71) Applicant: Thomson Licensing, 92130 Issy-les-Moulineaux (FR)
(72) Inventor: MINARD, Philippe, 35576 Cesson-Sévigné (FR); STEYER, Jean-Marie, 35576 Cesson-Sévigné (FR); BERTIN, Jean-Pierre, 35576 Cesson-Sévigné (FR); AUBIN, Anthony, 35576 Cesson-Sévigné (FR)
(74) Representative: Huchet, Anne

(57) **Abstract**

An antenna feeder (300) for feeding a slot or patch antenna integrated within an electronic device comprising a metallic two-parts housing (110, 150) in which is formed the slot or patch, and a PCB (140). The antenna feeder (electrically conducting element different from the PCB) comprises: a central part configured to be held mechanically by a dielectric support comprised inside the housing; a first extending part, extending from a first end of the central part towards the PCB, and integrating a first spring portion allowing the first extending part to be in electrical contact with the PCB; and a second extending part, extending from a second end of the central part and allowing for controlling the impedance of the antenna feeder. At least one of the central part, first extending part and second extending part is configured for electromagnetically coupling the antenna feeder with the slot or patch.

## Description

### 1. FIELD OF THE DISCLOSURE

The field of the disclosure is that of techniques for feeding antennas integrated in electronic devices.

More specifically, the disclosure relates to an antenna feeder for feeding slot or patch antennas formed in the casing of such electronic devices.

The disclosure can be of interest in any field where electronic devices integrate wireless features such as WiFi, Bluetooth, RF4CE, ZigBee, Zwave, LTE, etc., as for instance in home-networking electronic devices, such as Internet gateways, set-top-boxes, routers and smart home devices.

### 2. TECHNOLOGICAL BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Home-networking devices such as Internet gateways, set-top-boxes, routers and smart home devices integrate numerous wireless systems in order to offer multiple services and applications. These include different systems complying with various communication standards such as, for example, WiFi, Bluetooth, RF4CE, ZigBee, Zwave, LTE, etc.

It appears that the casing of such devices tends to evolve toward metal material for various reasons, e.g.:
- for proposing an aesthetical product with a metal high-end finishing metal surface;
- for proposing an heavy product with a high stability;
- for proposing a thinner product while being robust;
- for proposing a product with a more efficient thermal management;
- for proposing an increased isolation from the noise embedded in the electronic product;
- for managing any Electro-Magnetic Compatibility (EMC) issues.

However, such environment requires a high level of antenna integration in order to preserve antenna performances.

Slot or patch antennas, as well as cavity-backed slot or patch antenna are widely used in the context of electronic devices. Classically, the feeding of such antennas can be made using spring metal sheet that needs to be connected in an efficient way from the printed circuit board (PCB) toward the antenna in order to maximize the antenna efficiency.

In particular, Knorr, J.B., has described the theoretical aspect of classical technique for feeding a radiating slot in ***"***Slotline transitions", IEEE Trans., 1974. By extension this feeding technique can be applied to feed a slot antenna, where the slot antenna is either ended with an open circuit plane (as for example a tapered slot antenna) or with a short circuit plane with a slot length for example to target the fundamental mode of a half guided wavelength. In order to maximize the coupling between the radiating slot and the transmission line, which defines the transition plane, the electric field in the slot has to be maximized and the magnetic field in the transmission line has to be maximized. To maximize the magnetic field of the transmission line in the transition plane, there are two main methods:
- The first method uses a transmission line extended after the transition plane by a guided quarter wavelength long;
- The second method uses a transmission line short-circuited to ground just after crossing the slot line.

It must be noted that the first method has a narrower frequency bandwidth behavior than the second method due to the frequency dependency of the extended transmission line. The second method needs a good ground connection with a connection at the opposite slot side of the transmission line feeding port.

Similar feeding techniques are classically used with patch antenna.

However, in now trending casing as discussed above, the slot or patch antenna may be formed either in the metal casing or by both metal mechanical parts of the casing. For instance, a first sub-part of the casing forms a first edge of the slot and a second sub-part forms a second edge of the slot.

But in that later case the feeding of the antenna must be guaranteed while the antenna is formed when the assembly of the casing is performed. In other words, the feeding of the antenna must be done in a blind way, as the antenna itself does not exist before the casing is assembled, and the interior of the casing may be not accessible after this assembly of the casing.

The same problem holds when the antenna is formed directly in the metal casing as the PCB embedding the components providing (respectively retrieving) signals to (respectively from) the antenna may be put in place during the assembly of the electronic device, and the interior of the casing may be inaccessible after the assembly of the casing. Depending on the location of the antenna on the casing and the location of the PCB inside the casing, classical techniques for feeding slot or patch antenna as discussed above may not be usable.

More particularly, when the slot or patch antenna is not aligned with the feeding point, the feeder may low couple to the antenna for many reasons when the casing is assembled and closed in a blind way. For instance:
- the feeding may not respect the distance with the antenna;
- the feeding may not be correctly connected to the Printed circuit board.

There is thus a need for a system allowing to feed efficiently a slot or patch antenna located on the casing of an electronic device from a PCB embedded in the casing.

There is a need for this system to result in an efficient feeding while been mounted in a blind way during the assembly of the casing.

### 3. SUMMARY

A particular aspect of the present disclosure relates to an electronic device configured to perform wireless communications, comprising: a two-parts housing, comprising a first part of housing and a second part of housing, said housing being realized in metallic or metallized material; an antenna feeder configured for feeding an antenna, said antenna comprising a slot or patch formed in said two-parts housing and a printed circuit board comprising at least a driving circuit for said antenna feeder. The antenna feeder is an electrically conducting element, different from said printed circuit board and comprising:
- a central part;
- a first extending part, extending from a first end of said central part towards said printed circuit board to be in electrical contact with said printed circuit board;
- a second extending part, extending from a second end of said central part to be in electrical contact with said first part of housing;
at least one of the central part, first extending part and second extending part is configured for electromagnetically coupling said antenna feeder with said slot or patch.

Thus, the present disclosure proposes a new and inventive solution for the feeding of slot or patch antennas integrated in the casing of an electronic device, thus allowing the blind mounting of the feeder that electromagnetically couples the antenna to the electronic circuitry disposed on a printed circuit board within the casing.

For that, a central part of the feeder is held mechanically by a dielectric support comprised inside said two-parts housing , insuring the correct positioning of the feeder in respect of the radiating aperture for insuring a good electromagnetic coupling.

According to a first particular implementation, said first extending part is configured to be in electrical contact with said printed circuit board and said second extending part is configured to be in electrical contact with said first part of housing.

Thus, an electrical short-circuit is obtained at the coupling area between the antenna feeder and slot or patch antenna, thus participating to an optimal electromagnetic coupling. Furthermore, the short-circuit that is obtained exhibits a wideband behavior.

The first extending part comprises a first spring portion that is put in flexion during the assembly of the first and second part of housing, thus allowing a good electrical contact of the antenna feeder with the printed circuit board while the mounting is performed blindly.

According to a particular feature, said second extending part integrates a second spring portion contributing in having said second extending part in electrical contact with said first part of housing.

Thus, the short-circuit that is obtained at the coupling area between the antenna feeder and slot or patch antenna is particularly stable. The robustness of the assembly comprising the antenna feeder and the dielectric support is furthermore enhanced.

According to a particular feature, said second extending part comprises at least one protuberance configured to be in electrical contact with said first part of housing, through at least one opening in said dielectric support.Thus, the cooperation between the protuberance in the second extending part and the opening in the dielectric support enhances the robustness of the assembly comprising the antenna feeder and the dielectric support.

According to a second particular implementation, the length of said second extending part is a quarter of a wavelength of a guided wave fed by said driving circuit; and wherein said second extending part ends in open circuit.

Thus, an electrical short-circuit is obtained at the coupling area between the antenna feeder and slot or patch antenna, thus participating to an optimal electromagnetic coupling.

According to a particular feature, said central part comprises at least one hook configured for anchoring to said dielectric support.

Thus, a correct positioning of the antenna feeder in respect of the slot or patch antenna is obtained, thus participating to an optimal electromagnetic coupling.

Another particular aspect of the present disclosure relates to an assembly comprising an antenna feeder (as previously disclosed) and said dielectric support holding mechanically the central part of said antenna feeder, wherein said dielectric support fills at least one radiating aperture of said slot or patch.

Thus, the electrical length of the radiating aperture can be reduced.

### 4. LIST OF FIGURES

Other features and advantages of embodiments shall appear from the following description, given by way of indicative and non-exhaustive examples and from the appended drawings, of which:
- Figure 1a illustrates a perspective view of a wireless communication device according to an embodiment of the present disclosure;
- Figure 1b illustrates the assembly of the different parts of the wireless communication device of figure 1a, comprising the top housing, the spacer, the optional shielding, the printed circuit board and the bottom housing;
- Figures 2a, 2b, 2c and 2d illustrate respectively a perspective view of the top housing, of the spacer, of the printed circuit board and of the bottom housing disclosed in figure 1b;
- Figures 3a and 3b illustrate an antenna feeder according to different embodiments of the present disclosure;
- Figure 4a illustrates the assembly of the different parts of an antenna comprising an antenna feeder according to one embodiment of the present disclosure;
- Figure 4b illustrates an antenna according to the embodiment of figure 4a;
- Figure 5 illustrates the different parts of a patch antenna according to an embodiment of the present disclosure.

### 5. DETAILED DESCRIPTION

In all of the figures of the present document, the same numerical reference signs designate similar elements and steps.

The general principle of the disclosed method consists in an antenna feeder comprising a central part configured to be held mechanically by a dielectric support comprised inside the two-parts housing of an electronic device, and a first extending part that extends from a first end of the central part towards the PCB the antenna has to be connected to. The first extending part integrates a first spring portion allowing the good electrical contact of the antenna feeder with the PCB while assembling the casing of the electronic device. The antenna feeder further includes a second extending part that extends from a second end of the central part and allowing for controlling the impedance of the antenna feeder. At least one of the central part, the first extending part and the second extending part is configured for electromagnetically coupling the antenna feeder with said slot or patch thus resulting in the foreseen feeding functionality while allowing for the blind mounting during the assembly of the two parts of the casing.

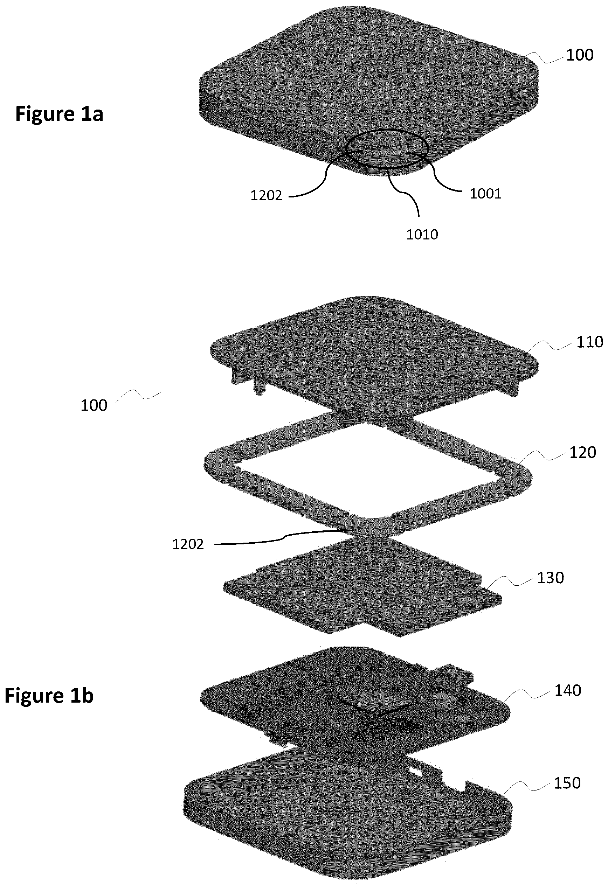

Referring now to **figure 1a****,** we present a perspective view of a wireless communication device according to embodiments of the present disclosure.

In the present embodiment, the device 100 is a set top box. It comprises four 5 GHz antennas for WiFi and one 2.4 GHz antenna for Bluetooth wireless communications, although not illustrated in Figure 1A. Connectivity to other devices, such as a television for rendering, is provided through various connectors such as Universal Serial Bus type-C (USB-C) or High-Definition Multimedia Interface (HDMI). The device integrates decoding capabilities of audiovisual signals received either through the wireless communication or through the physical connectors as well as interaction with the user through a user interface. The housing of the device is mainly made of metal, therefore making it challenging to integrate wireless communication capabilities with good performances.

A slot antenna 1010 is present on each of the four corners of the casing of the device 100. As disclosed below in relation with figure 1b, the radiating aperture 1001 of the slot antenna (i.e. the slot itself, in the meaning of the physical slot aperture in the metal casing) is filled with a part 1202 of a spacer (120) made of dielectric material, thus allowing reducing the electrical length of the radiating slot aperture.

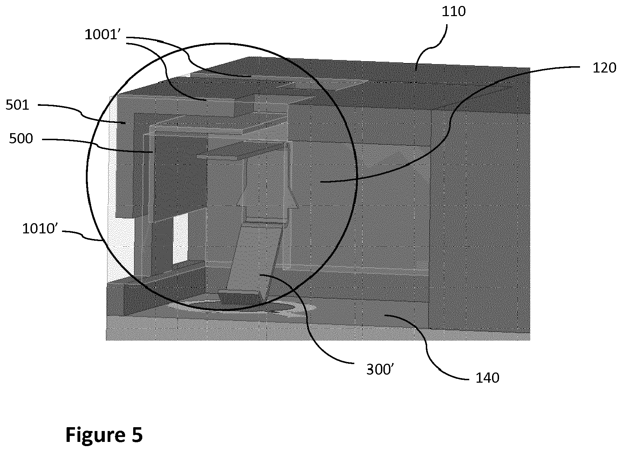

In other embodiments, slot antennas may be present or added at other locations by creating other apertures. Patch antenna(s) may also be considered in addition or in place of slot antenna(s) as disclosed below in relation with figure 5.

Referring now to **figure 1b****,** we present an exploded view showing the assembly of the different parts of the wireless communication device 100 of figure 1a.

A top housing 110 is realized in metal, either by using die casting or machining techniques and forms the first part of the cavity-backed antenna. A spacer 120 allows forming a gap between the top housing 110 and the bottom housing 150, resulting for example in one of the four slot antennas 1010. This spacer is preferably realized in dielectric material (ABS material for example) that reduces the antenna sizes, but can be also an air filled zone that can increase the antenna efficiency. The gap width controls both the antenna bandwidth and efficiency. In the present embodiment, the part 1202 of the spacer 120 is configured for filling the radiating aperture 1001 of the slot antenna, thus allowing reducing the electrical length of the radiating slot aperture. This mechanical part can be realized by molded injection technique. An optional shielding 130 is soldered or fixed onto a printed circuit board 140 to reduce noise in the device. An optional thermal pad can be applied between an electronic component and one or both metal parts of the housing. The inner sides of the top and / or bottom housing can be mechanically matched in order to reduce the thermal pad height for cost saving reasons. The printed circuit board 140 forms the second part of the cavity-backed antenna. In this cavity surface area the printed circuit board comprises at least one conductive layer. A bottom housing 150 is realized in metal, either by using die casting or machining techniques and forms the third part of the cavity-backed antenna. The cavities are therefore formed by the assembly of the top housing, the printed circuit board and the bottom housing. Each cavity is linked from RF circuitry to an antenna conductor feeder that is either directly connected with the top and/or the bottom housing forming the (slot) antenna or electromagnetically coupled to the (slot) antenna.

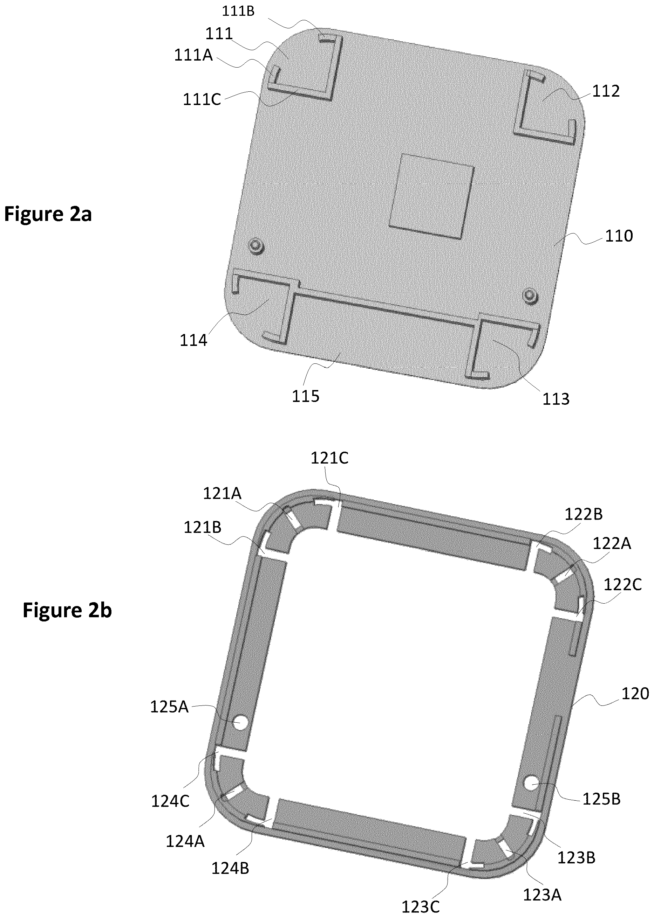

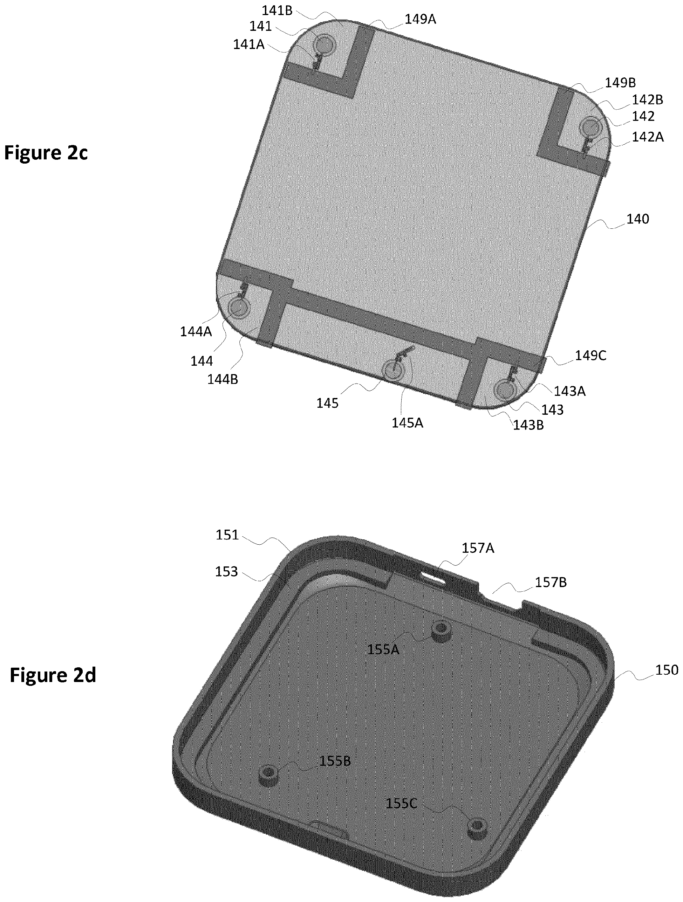

Referring now to **figure 2a, 2b****,** **2c and 2d****,** we present perspective views of the top housing 110, of the spacer 120, of the printed circuit board 140 and of the bottom housing disclosed 150 in figure 1b.

More particularly, areas 111, 112, 113, 114 are representing the cavities of the 5 GHz antennas. Taking the example of cavity 111, the first part of the cavity is formed by the surface of the top housing 110, completed by the side walls 111A, 111B and by the rear wall 111C. These walls are either formed in the top surface or fixed to the top surface as a separate metallic part. In order to enable wide band frequency applications, the quality factor of the cavity should be minimized. The side walls allow the adjustment of the resonating frequency of the cavity-backed antenna. The form and dimension of the walls is determined by simulations according to the overall form of the device. The four 5 GHz cavities are arranged to propose a radiation pattern diversity so as for example to propose a complementary radiation pattern in the horizontal plane of the device. Higher MIMO order can be addressed with this arrangement by adding slot aperture on the same device edge (between current 5GHz antennas in each corner), or by creating additional aperture in this first part of the metal housing. The cavity 115 is dedicated to 2.4GHz. The principles described above apply for this cavity.

The spacer 120 comprises multiple cuts and openings in the dielectric. Openings 121A, 122A, 123A, 124A are arranged to support the antenna feeder. Cuts 121B, 121C, 122B, 122C, 123B, 123C, 124B, 124C are arranged to insert the top housing and are particularly adapted to fit to the walls integrated into the top housing. Optionally, holes 125A, 125B are arranged to allow insertion of the top housing and to provide guidance for positioning and maintaining the spacer towards the top housing.

The printed circuit board 140 hosts the electronic components that provide the functionality of the device. These components are not shown in the figure. It comprises conductor pads 141, 142, 143, 144, 145 allowing the contact of an antenna feeder (not represented) to the slot antenna, antenna driving circuits 141A, 142A, 143A, 144A, 145A. The cavity areas 141B, 142B, 143B, 144B use filled conductor and plated through holes may be added to increase the energy transfer from the printed circuit board to the antenna. Ground planes 149A, 149B, 149C are arranged on the top layer of the printed circuit board, coating-free, to ensure good ground connection with the walls of the top cover. Indeed electric contacts between the printed circuit board and the walls of the top cover ensure an electromagnetic sealing of the cavity. The contact points between the printed circuit board and the wall of the top housing are distant by less than a quarter of the wavelength and preferably the contacts are nearly continuous, for example through the use of metallic foam. The person skilled in the art will appreciate that several solutions may be used to ensure the electrical connection between the wall of the top cover and the ground plane on the printed circuit board such as spring contacts, solder paste, or metallic foam.

The vertical part 151 and the horizontal part 153 of the bottom housing 150 form the third part of the cavities for each of the cavity-backed antennas. Indeed, the horizontal part is required to close the cavity since the printed circuit board does not fit perfectly to the vertical part: some free space needs to be provisioned around the printed circuit board to allow its assembly. Optionally, holes 155A, 155B, 155C are used to fix the printed circuit board onto the bottom housing 150 and holes 157A, 157B are used to interface the device with external elements by connecting cables or devices, such as DC power unit, HDMI, USB, USB-C, etc. Optionally, the bottom housing can also integrate walls similar to the walls integrated to the top housing in order to further improve the isolation of the cavities.

The person skilled in the art will appreciate that other arrangements of the different elements composing the device are possible. For example, when the device is standing up (being mostly vertical and not mostly horizontal as described in the Figure 1 A), the top and bottom housings are replaced by left and right housings or front and rear housings, without altering the principle of the invention. The position of the antennas can also be changed with minor impact of the performances. For example, the 5 GHz antennas could be placed in the middle of each side of the device and the 2.4 GHz antenna could be placed in a corner of the device. Any other number of (slot or patch) antennas could be used. For example, doubling the number of antennas of the preferred embodiment using 8 antennas for the 5 GHz and 2 for the 2.4 GHz, the antennas being distributed over the sides, corner, and top of the housing.

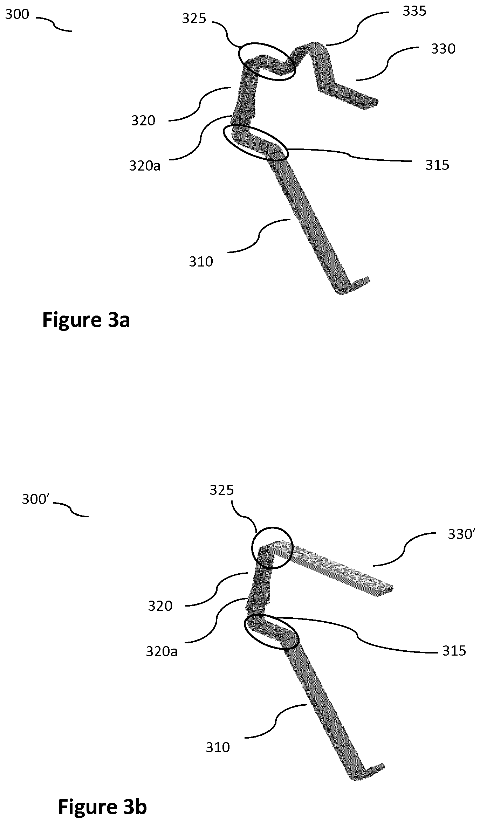

Referring now to **figure 3a****,** we present an antenna feeder according to an embodiment of the present disclosure.

The antenna feeder 300 is an electrically conducting element (whether a metalized plastic element or an element made of any suitable metal known by the person skilled in the art) configured for being in contact with the conductor pads 141, 142, 143, 144, 145 in order to couple electromagnetically the signal delivered by a antenna driving circuit 141A, 142A, 143A, 144A, 145A present on the PCB 140 to the radiating aperture 1001 of the slot antenna 1010, and vice-versa.

For that, the antenna feeder 300 comprises a central part 320 configured to be held mechanically by a dielectric support, here a part of the spacer 120. In the present embodiment, the central part 320 comprises hooks 320a configured for cooperating with complementary grooves (not shown) in the spacer 120, thus resulting in the mechanical retention of the central part 320 by the spacer 120.

The antenna feeder 300 also comprises a first extending part 310, extending from a first end of the central part 320 towards a conductor pad 141, 142, 143, 144, 145 of the PCB 140. The first extending part 310 further integrates a first spring portion 315 allowing the first extending part 310 to be in electrical contact with the PCB 140.

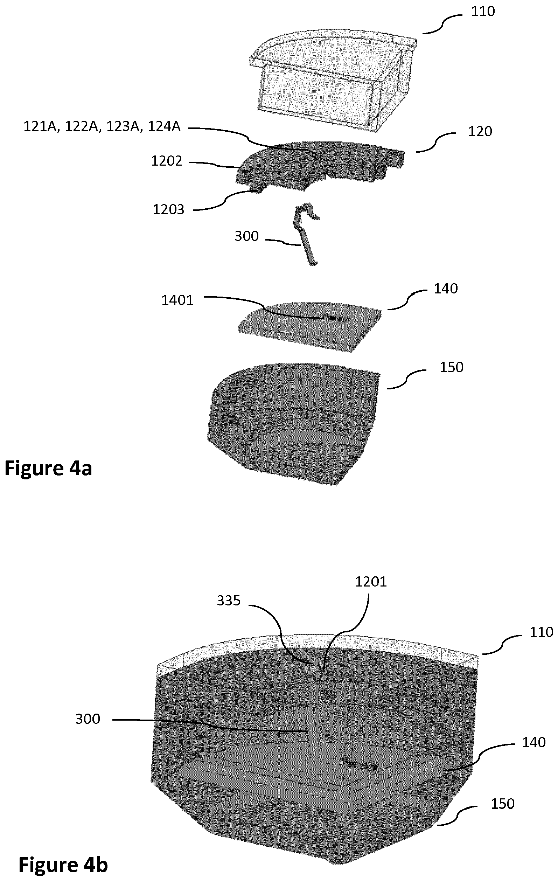

Indeed, as disclosed in relation with figure 4a below, when the top housing 110 and bottom 150 housing are mounted together with the spacer 120 and the PCB 140 in between, the first extending part 310 is put in contact with a conductor pad 141, 142, 143, 144, 145 of the PCB 140 so that the first spring portion 315 is put in flexion, thus allowing a good electrical contact while the mounting is performed blindly. It must be noted that the first extending part 310 is put in contact with a conductor pad 141, 142, 143, 144, 145 of the PCB 140 through a portion that is also bent in order to not degrade the conductive layer (e.g. the surface copper layer) of the PCB 140 during its blind mounting inside the casing. Indeed, such blind mounting may involve a displacement of the extremity of the first extending part 310 on the conductor pad 141, 142, 143, 144, 145 when the first spring portion 315 enters a flexion area.

In the present embodiment, the first spring portion 315 is made of two bent portions; the elasticity of the material of the feeder 300 insures the spring function. In variants, only one bent portion may be used.

The antenna feeder 300 further comprises a second extending part 330, extending from a second end of the central part 320 and allowing for controlling the impedance of the antenna feeder 300.

Indeed, as discussed in relation with the technological background of the present disclosure, the electromagnetic coupling between the antenna feeder 300 and the slot antenna 1010 is maximum when the impedance of the feeder 300 as seen in the plane of the slot corresponds to a short circuit. For achieving this result, the second extending part 330 comprises a protuberance 335 configured for being in contact with the metallic top housing 110 when the casing is mounted. It results in the expected short-circuit at the level of the central part 320, the central part 320 being the part that indeed couples to the radiating aperture 1001 of the slot antenna 1010 as disclosed below in relation with figures 4a and 4b. In other embodiments, as for instance disclosed in relation with figure 5, another part of the antenna feeder 300 is configured to couple to the radiating aperture, e.g. the first extending part or the second extending part.

The second extending part integrates a second spring portion 325 contributing in having the protuberance 335 of the second extending part 330 in electrical contact with the top housing 110 for the same reasons as disclosed above in relation with the first spring portion 315. The same variants as discussed above for the first spring portion 315 can also be considered for the second spring portion 325.

Referring now to **figure 3b****,** we present an antenna feeder according to another embodiment of the present disclosure.

The second extending part 330' of the antenna feeder 300' is not configured for being in contact with the top housing 110 when the casing is assembled but rather to not be in contact with any electrical ground.

As such, the second extending part 330' ends in open-circuit and the impedance as seen at the level of the central part 320 is tuned in respect of the electrical length of the second extending part 330'.

In a variant, the length of the second extending part is a quarter of a wavelength of a guided wave fed by the driving circuit 141A, 142A, 143A, 144A, 145A. Accordingly, having that the second extending part 330' ends in open-circuit, the impedance as seen at the level of the central part 320 is still the expected short-circuit. However, this holds only at the carrier frequency of the guided wave. Consequently, this approach may work over a narrower frequency band compared to the approach disclosed in relation with figure 3a.

Referring now to **figures 4a and 4b****,** we present the assembly of the different parts of an antenna comprising an antenna feeder according to one embodiment of the present disclosure and the resulting slot antenna.

In this embodiment, the spacer 120 presents openings 121A, 122A, 123A, 124A arranged for supporting the antenna feeder 300. More precisely, the openings 121A, 122A, 123A, 124A comprise grooves (not shown) configured for cooperating with the hooks 320a disposed on the central part 320 of the antenna feeder 300. Consequently, the central part 320 is mechanically retained by the spacer 120 so that:
- the protuberance 335 exceeds the upper surface of the spacer 120 so that it comes in physical, and thus electrical, contact with the top housing 110 during the assembly of the top housing 110, of the spacer 120 previously assembled with the antenna feeder 300, of the PCB 140 and of the bottom housing 150;
- the central part 320 is maintained against a portion 1203 of the spacer so that it is at a predefined distance of the radiating aperture 1001 after blind mounting in the casing. This allows controlling accurately the electromagnetic coupling between the central part 320 and the radiating aperture 1001;
- the first extending part 310 is put in contact with one conductor pad 141, 142, 143, 144, 145 of the PCB 140 so that the first spring portion 315 is put in flexion, thus allowing a good electrical contact while the mounting is performed blindly.

As disclosed above in relation with figures 1a and 1b, a part 1202 of the spacer 120 (made of dielectric material) is configured for filling the radiating aperture 1001 of the slot antenna, thus allowing reducing the electrical length of the radiating slot aperture.

Referring now to **figure 5****,** we present the different parts of a patch antenna according to one embodiment of the present disclosure.

An antenna feeder 300' is used for coupling the signal between the PCB 140 and the cavity-backed patch antenna 1010' (comprising two radiating apertures 1001').

More particularly, in the present embodiment, the patch antenna 1010' is of a stacked patch type, i.e. it comprises a first metallic patch 500 electromagnetically coupled to the antenna feeder 300', and a second patch 501 (also called parasitic patch) connected to the top housing and/or the bottom housing in the magnetic (H) plane of the cavity-backed patch antenna 1010'. This configuration allows to increase the impedance frequency bandwidth of the cavity-backed patch antenna 1010'.

In the present embodiment, the second extending part 330' of the antenna feeder 300' is configured to couple to the cavity-backed patch antenna 1010' (comprising two radiating apertures 1001').

In another embodiment, a part of the spacer 120 is configured for filling the radiating apertures 1001' and/or at least part of the cavity of the cavity-backed patch antenna 1010', thus allowing reducing the electrical length of the radiating apertures.

Electronic device 100 can also be any other electronic device comprising an antenna as described, such as a gateway, a tablet, a smartphone, a head-mounted display for instance. Although the description has been done with a housing realized in metal, the person ordinarily skilled in the art will understand that the housing can also be realized in non-metallic materials (such as plastic, ceramic, glass, organic materials, etc.) whose surface is being metallized, therefore obtaining the same effects, except the increased robustness and thermal efficiency for some materials.

## Claims

1. An electronic device (100) configured to perform wireless communications, comprising: a two-parts housing, comprising a first part of housing (110) and a second part of housing (150), said housing being realized in metallic or metallized material; an antenna feeder (300, 300') configured for feeding an antenna, said antenna comprising a slot or patch formed in said two-parts housing and a printed circuit board (140) comprising at least a driving circuit (141A, 142A, 143A, 144A, 145A) for said antenna feeder; **characterized in that** the feeder is an electrically conducting element, different from said printed circuit board and comprising:
• a central part (320);
• a first extending part (310), extending from a first end of said central part towards said printed circuit board to be in electrical contact with said printed circuit board; and
• a second extending part (330, 330'), extending from a second end of said central part to be in electrical contact with said first part of housing (110);
at least one of the central part, first extending part and second extending part is configured for electromagnetically coupling said antenna feeder with said slot or patch.

2. Electronic device (100) according to claim 1, wherein said central part (320) of antenna feeder (300, 300') is configured to be held mechanically by a dielectric support (120) comprised inside said two-parts housing.

3. Electronic device (100) according to any of the claims 1 or 2, wherein said first extending part of antenna feeder (300, 300') integrates a first spring portion (315) allowing said first extending part to be in electrical contact with said printed circuit board.

4. Electronic device (100) according to any of the claims 1 to 3, wherein said second extending part of antenna feeder (300, 300') is configured to determine the impedance of said antenna feeder.

5. Electronic device (100) according to any of the claims 1 to 4, wherein said second extending part of antenna feeder (300, 300') integrates a second spring portion (325) contributing in having said second extending part in electrical contact with said first part of housing.

6. Electronic device (100) according to any of the claims 1 to 5, wherein said second extending part of antenna feeder (300, 300') comprises at least one protuberance (335) configured to be in electrical contact with said first part of housing, through at least one opening (121A, 122A, 123A, 124A) in said dielectric support.

7. Electronic device (100) according to claim 1, wherein the length of said second extending part of antenna feeder (300, 300') is a quarter of a wavelength of a guided wave fed by said driving circuit; and wherein said second extending part ends in open circuit.

8. Electronic device (100) according to any of the claims 1 to 7, wherein said central part of antenna feeder (300, 300') comprises at least one hook (320a) configured for anchoring to said dielectric support.

9. Electronic device (100) according to any of the claims 1 to 6 wherein said dielectric support fills at least one radiating aperture (1001, 1001') of said slot or patch.

10. Electronic device (100) according to claim 1 **characterized in that** said electronic device (100) is a set-top box, gateway, a tablet, a smartphone, or a head-mounted display.
